(19) Europäisches Patentamt / European Patent Office / Office européen des brevets

(11) **EP 3 431 740 B1**

(12) **EUROPEAN PATENT SPECIFICATION**

(45) Date of publication and mention
of the grant of the patent:
**06.05.2026 Bulletin 2026/19**

(21) Application number: **16894300.9**

(22) Date of filing: **14.03.2016**

(51) International Patent Classification (IPC):
*F02D 13/02* (2006.01)  *F02D 15/00* (2006.01)
*F02D 19/02* (2006.01)  *F02D 29/02* (2006.01)
*F02D 45/00* (2006.01)  *F02D 15/04* (2006.01)
*F02D 19/10* (2006.01)  *F02D 19/06* (2006.01)
*F02D 41/00* (2006.01)  *F02D 29/06* (2006.01)
*F01L 13/00* (2006.01)

(52) Cooperative Patent Classification (CPC):
**F02D 13/0238; F02D 13/0269; F02D 15/04;**
**F02D 19/105; F02D 41/0027;** F01L 13/0026;
F01L 2013/103; F01L 2013/106; F02D 19/02;
F02D 19/0647; F02D 29/06; F02D 41/0007;
F02D 2041/001; F02D 2200/1002; F02D 2200/101;
(Cont.)

(86) International application number:
**PCT/JP2016/057955**

(87) International publication number:
**WO 2017/158676 (21.09.2017 Gazette 2017/38)**

(54) **ENGINE SYSTEM AND CONTROL METHOD THEREFOR**

MOTORSYSTEM UND STEUERUNGSVERFAHREN DAFÜR

SYSTÈME MOTEUR ET SON PROCÉDÉ DE COMMANDE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**23.01.2019 Bulletin 2019/04**

(73) Proprietor: **IHI Power Systems Co., Ltd.**
**Chiyoda-ku**
**Tokyo 101-0021 (JP)**

(72) Inventors:
• **WATANABE, Koichi**
**Tokyo 101-0021 (JP)**
• **YUKI, Kazuhiro**
**Ota-city**
**Gunma 373-0847 (JP)**

(74) Representative: **Nederlandsch Octrooibureau**
**P.O. Box 29720**
**2502 LS The Hague (NL)**

(56) References cited:
EP-A1- 1 460 250      EP-A2- 2 009 264
JP-A- 2002 021 608    JP-A- 2002 021 608
JP-A- 2009 057 958    JP-A- 2013 185 515
JP-A- 2015 048 790    JP-A- H07 259 655
JP-A- H10 141 068     US-A1- 2012 279 218
US-A1- 2015 047 587   US-B1- 6 230 683
US-B1- 6 460 337

(52) Cooperative Patent Classification (CPC): (Cont.)
F02D 2700/0212; Y02T 10/12; Y02T 10/30

## Description

Technical Field

The present invention relates to a 4-stroke engine system according to the preamble of claim 1 and a control method therefor.

Background Art

In the related art, as an example of an engine system using fuel gas, a dual fuel engine that can correspond to any one of fuel gas such as natural gas or the like and liquid fuel such as heavy fuel or the like is known. In addition, in an internal combustion engine, it is known that engine performance can be appropriately controlled using a variable valve timing mechanism, and an effect of lowering an effective compression ratio of a fuel-air mixture under the control is also known. For example, internal combustion engines including variable valve timing mechanisms are known in the following Patent Documents 1 to 6.

For example, the variable valve timing apparatus disclosed in Patent Document 1 is installed in a gasoline engine and is configured to change a valve opening timing of an intake valve in an internal combustion engine. The internal combustion engine has a turbocharger and the variable valve timing apparatus and a target turbocharging pressure of the turbocharger is set, and when power of the internal combustion engine is within a predetermined high power range, a target valve closing timing is set such that an expansion ratio during a combustion cycle exceeds a compression ratio and that the expansion ratio approaches the compression ratio as the detected power of the internal combustion engine is increased. Accordingly, a limit at which knocking begins to occur is expanded by suppressing an increase in turbocharging pressure. Then, by employing a mechanism using two cams of a main intake cam and a sub intake cam and changing phases of the two cams, both of a valve opening timing and a valve closing timing are varied.

In the dual fuel engine disclosed in Patent Document 2, during operation of a premixed combustion mode, a compression ratio is suppressed in order to prevent occurrence of knocking, and during operation of a diffusion combustion mode, the engine is operated at a higher compression ratio in order to improve thermal efficiency or fuel ignitability. An intake valve driving means and a crank angle detection means are provided, and upon the operation of the premixed combustion mode (a gas engine mode), a signal that advances a valve closing timing of an intake valve more than during the operation of the diffusion combustion mode is output.

In the premixed combustion mode of Patent Document 2, the valve closing timing of the intake valve is set to a predetermined position of 60° to 70° before bottom dead center, and the advanced angular position is not varied during the premixed combustion mode.

In addition, in an internal combustion engine disclosed in Patent Document 3, valve opening timing and valve closing timing of an exhaust valve are advanced by advance of the exhaust valve, thereby a part of an exhaust gas in a combustion chamber is flowed backward to an intake port, and thus, a combustion state of the internal combustion engine is improved. When it is assumed there is a torque detection means configured to detect an output torque output from an engine main body and that the detected output torque is smaller than a limit torque, execution of early closing control of the exhaust valve is prohibited. Accordingly, occurrence of torque fluctuation that causes deterioration of drivability, an engine stall, or the like is prevented.

In addition, examples of specific configurations of the variable valve timing mechanism are disclosed in the following Patent Documents 4 to 6.

As shown in FIGS. 11A and 11B, a driving mechanism of a variable valve timing mechanism 100 disclosed in Patent Document 4 includes a link mechanism 101 and an actuator 102. In the link mechanism 101, an exhaust valve swing arm 103 connected to a push rod of an exhaust valve of an engine is supported by a link shaft 104, and an intake valve swing arm 105 connected to a push rod of an intake valve is supported by a tappet shaft 106 of an eccentric shaft section that is eccentric from the link shaft 104.

Each of the exhaust valve swing arm 103 and the intake valve swing arm 105 can be advanced and retracted by an eccentric cam 108a of a cam shaft 108. In addition, the link shaft 104 is connected to a piston rod 109 installed on the actuator 102.

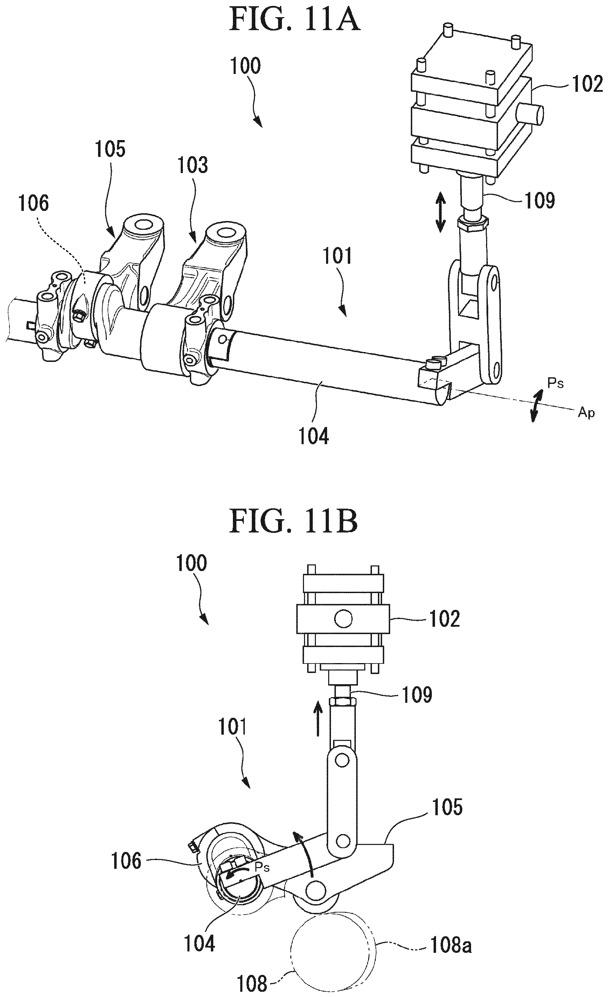

When positions shown in FIG. 11B are before a jumping-out operation of the piston rod 109, by performing the jumping-out operation of the piston rod 109 using the actuator 102, both of the swing arms 105 and 103 connected thereto are rotated toward one side. For this reason, a pivoting angle of both of the swing arms 105 and 103 can be controlled by the actuator 102 via the link mechanism 101.

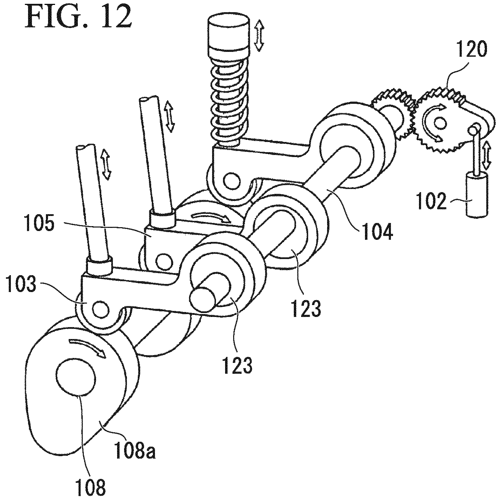

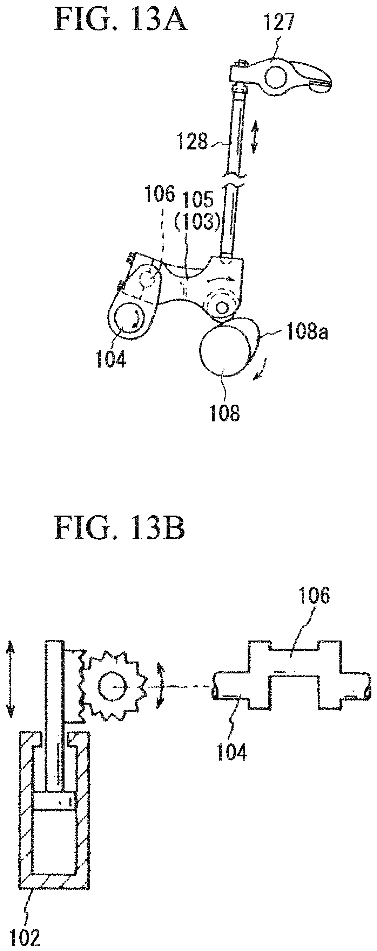

In addition, the variable valve timing mechanisms disclosed in Patent Documents 5 and 6 are disclosed in FIGS. 12 and 13 as another example. The same components as the variable valve timing mechanism 100 shown in FIG. 11 are designated by the same reference numerals and will be described.

In the variable valve timing mechanism shown in FIG. 12, a rotation range of the link shaft 104 is restricted within a range of a tooth section of a sector gear 120 connected to the actuator 102, and eccentric disks 123 (corresponding to a tappet shaft) eccentrically connected to the link shaft 104 are held by base sections of the exhaust valve swing arm 103 and the intake valve swing arm 105.

For this reason, in regard to a deviation of a rotation angle position of each of the eccentric disks 123 with respect to a rotation position of the link shaft 104, a position at which the eccentric cam 108a of the cam shaft 108 abuts and pushes up the exhaust valve swing arm 103 or the intake valve swing arm 105 is varied.

In an example shown in FIGS. 13A and 13B, the exhaust valve swing arm 103 or the intake valve swing arm 105 connected to a rocker arm 127 via a push rod 128 is connected to the tappet shaft 106 (a support position of the swing arm) of the crank-shaped link shaft 104. As a phase of the crank-shaped link shaft 104 is changed (pivoted) by the actuator 102, the support position of the intake valve swing arm 105 or the exhaust valve swing arm 103 is changed, and as a result, a contact position of the intake valve swing arm 105 or the exhaust valve swing arm 103 with the cam shaft 108 is changed. Accordingly, a timing when the eccentric cam 108a of the cam shaft 108 presses the exhaust valve swing arm 103 or the intake valve swing arm 105 to advance or retract the exhaust valve swing arm 103 or the intake valve swing arm 105 using the cam shaft 108 becomes variable.

Document of Related Art

Patent Document

Patent Document 1: Japanese Patent No. 4137704
Patent Document 2: Japanese Unexamined Patent Application, First Publication No. 2008-202545
Patent Document 3: Japanese Patent No. 4367532
Patent Document 4: PCT International Publication No. 2015/060117
Patent Document 5: European Patent Publication No. 2136054
Patent Document 6: Japanese Unexamined Patent Application, First Publication No. S62-99606

Another relevant patent document is US 6 230 683 B1.

Summary of Invention

Technical Problem

In the fuel gas engine in the related art, even when a feed rate of a fuel gas is increased in a fast rate in order to rapidly raise power, it is impossible for the turbocharger to follow the increase in the fuel gas and supply a required air quantity. This is because the turbocharger is driven by the exhaust gas, and therefore the turbocharger does not work effectively unless power of a gas fueled engine rises and the exhaust gas is sufficiently supplied to the turbocharger. When an air quantity is insufficient, the air-fuel ratio becomes gas-rich and knocking occurs, leading to a failure of the engine. When the power is raised at a speed to which the turbocharger can follow in order to suppress the knocking, it takes a long time of about 10 minutes to raise the power.

In addition, emission regulations of harmful exhaust gases have become stricter year by year even in marine engines, and it is required to introduce a dual fuel engine in which emission rates of harmful exhaust gases caused by the fuel can be reduced enough to satisfy the emission regulations. However, in order to introduce such a dual fuel engine, it is necessary to shorten a power-up time that satisfies an operation mode of the marine engine to about 20 seconds.

In consideration of the above-mentioned circumstances, an object of the present invention is to provide an engine system capable of shortening a power-up time while suppressing knocking occurring when power of a fuel gas engine is raised, and a control method therefor.

Solution to Problem

An engine system according to the present invention is defined in claim 1.

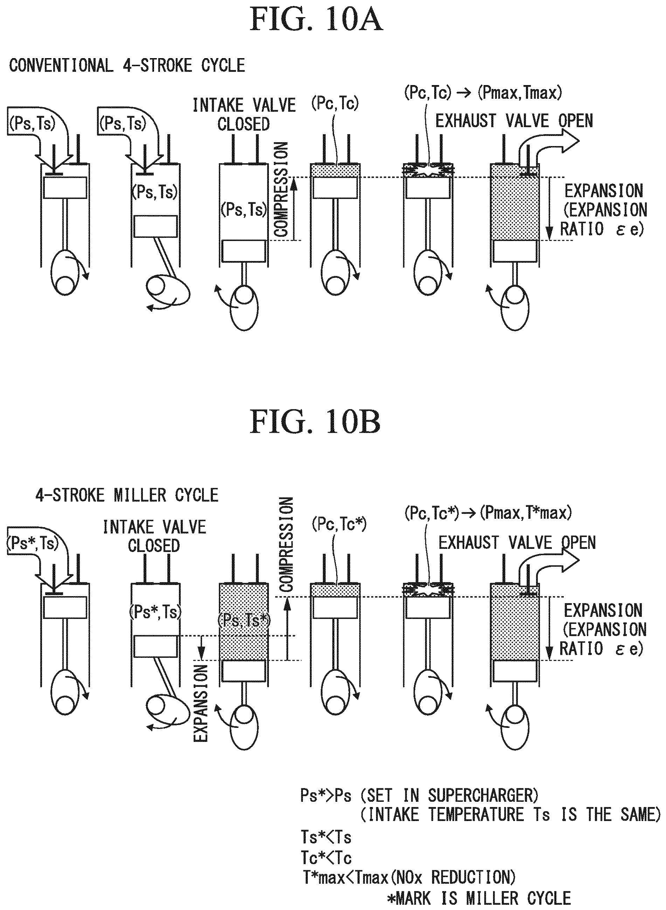

As a knocking suppressing technology of an engine, an effective compression ratio can be lowered using a variable intake valve timing (VIVT) mechanism. In this regard, the knocking suppressing technology will be described with reference to FIGS. 10A and 10B. FIG. 10A shows processes of a conventional 4-stroke cycle, and FIG. 10B shows processes of a Miller cycle.

For example, in a gas engine, conventionally, an intake valve is closed at bottom dead center of a piston (see FIG. 10A). When a closing timing is earlier than bottom dead center (see FIG. 10B), since expansion of a fuel-air mixture is continued even after closing of the intake valve, an in-cylinder temperature Ts is lower than in the case of FIG. 10A (Ts* < Ts). Since a maximum compression temperature upon top dead center is also lowered to that extent (Tc* < Tc), self-ignition can be prevented and knocking can be suppressed.

As a defect of the Miller cycle, since a compression temperature is lowered and ignitability of a low power region is deteriorated, it is necessary to return to a conventional valve opening timing of the intake valve shown in FIG. 10A upon starting or low power, and advance a valve opening timing of the intake valve upon high power only.

In the gas engine according to the present invention, when a feed rate of a fuel gas is increased and power of the output shaft of the gas engine is enhanced, by advancing or retarding a closing timing of the intake valve from intake bottom dead center, control of lowering a compression ratio of a fuel-air mixture in the combustion chamber of the engine is performed. Since a temperature in the combustion chamber upon compression is decreased by lowering the compression ratio, knocking can be suppressed.

When the compression ratio of the fuel-air mixture in the combustion chamber is lowered, since ignitability deteriorates and condition in terms of fuel efficiency departs from an advantageous condition upon starting and low power, a disadvantage in which fuel consumption deteriorates may occur. Here, in the present invention, by changing a closing timing of the intake valve more largely in an operation range in which power is further increased and knocking is more likely to occur, control of lowering the compression ratio at a larger ratio is performed. Accordingly, knocking can be suppressed according to a variation in power, and a power-up time can be shortened while preventing deterioration of fuel consumption.

In addition, the engine system includes: a torque sensor configured to measure a torque of the output shaft; and a rotational speed sensor configured to measure a rotational speed of the output shaft, power of the output shaft may be obtained from a torque measurement value by the torque sensor and a rotational speed measurement value by the rotational speed sensor, and then the change of the closing timing of the intake valve may be set in the control unit.

In the gas engine according to the present invention, since a gas serving as fuel is an elastic medium, it is relatively difficult to obtain a more accurate feed rate of the fuel in comparison with liquid fuel. Here, power is preferably calculated in relation to a rotational speed and a torque obtained by performing measurement of an actual torque using the torque sensor. Moreover, power of the output shaft of the engine can be obtained in real time by calculating a product of a rotational speed measurement value of the output shaft obtained by the rotational speed sensor and a torque measurement value obtained by the torque sensor.

In addition, the variable intake valve timing mechanism is configured to adjust advance amount of the closing timing of the intake valve from bottom dead center.

It is possible to obtain an effect of lowering the compression ratio and this can be applied to the present invention even in any one operation of advancing and retarding the closing timing of the intake valve. However, since the operation of retarding the closing timing of the intake valve may be harmful due to blowing-back of the fuel-air mixture to an intake system, it is more desirable to set the advance of the closing timing of the intake valve.

In addition, adjustment of the advance amount of the closing timing of the intake valve may be performed continuously or by multiple stages by the variable intake valve timing mechanism.

It is preferable to variably set the advance amount of the closing timing of the intake valve continuously or by multiple stages according to a variation in power in order to suppress knocking and shorten a power-up time.

In addition, the advance amount determined in the control unit may be set from a value of the advance amount determined using as parameters a plurality of data on power and rotational speed of the output shaft which are previously measured.

While an appropriate value of the advance amount of the closing timing of the intake valve becomes larger when the power is increased, in addition to this, the value also depends on the rotational speed. For this reason, knocking can be suppressed more reliably by previously creating a map including at least these two types of parameters, and controlling the advance amount of the closing timing of the intake valve according to a variation in power and rotational speed of the engine.

In addition, in an intake pipe of the engine, a turbocharger configured to perform turbocharging and an air cooler configured to cool air from the turbocharger before the air is supplied to the intake pipe is provided.

While occurrence of knocking can be suppressed by increasing the advance amount or the retard amount of the closing of the intake valve to lower a compression ratio as the power is increased, this may bring disadvantage in regard to power-up of the engine because an amount of the fuel-air mixture that can be taken in the combustion chamber is reduced. For this reason, reduction of the fuel-air mixture can be supplemented by installing a turbocharger in the intake pipe of the engine, an increase in the temperature of air due to turbocharging can be minimized by cooling the air using the air cooler, knocking can be suppressed by decreasing the temperature of the air while contributing to power-up of the engine by increasing an amount of the fuel-air mixture, and a power-up time can be shortened.

A control method for an engine system according to the present invention is defined in claim 4

In the control method for an engine system according to the present invention, when power of the output shaft of the gas engine is increased, by advancing or retarding the closing timing of the intake valve from intake bottom dead center, control of lowering a compression ratio of the fuel-air mixture in the combustion chamber of the engine is performed. Since a temperature in the combustion chamber upon compression is decreased by lowering the compression ratio, knocking can be suppressed.

Advantageous Effects of Invention

According to the engine system and the control method therefor of the present invention, since a compression ratio of a fuel-air mixture in the engine can be lowered when power of the output shaft of the engine is increased, a power-up time can be shortened while suppressing knocking upon power-up.

Brief Description of Drawings

FIG. 1 is a block diagram showing a configuration of major parts of a marine dual fuel engine according to an embodiment of the present invention.
FIG. 2 is a view showing a diesel mode and a gas mode in the dual fuel engine shown in FIG. 1.

FIG. 3 is a 3-dimensional map showing a relationship between power, a rotational speed, and a valve closing timing of an intake valve.

FIG. 4 is a graph showing a knocking suppression range with the relationship between the power, the rotational speed and the valve closing timing of the intake valve.

FIG. 5 is a second map showing a relationship between a valve closing timing obtained from a first map and a first electric signal.

FIG. 6 is a flowchart showing processes for changing an intake valve opening/closing timing of the dual fuel engine shown in FIG. 1.

FIG. 7 is a flowchart showing processes for changing an intake valve opening/closing timing when a servo motor is used instead of an actuator of the dual fuel engine according to the embodiment.

FIG. 8 is a graph of test results showing a relationship between a power-up time and power of the dual fuel engine according to the embodiment.

FIG. 9 is a view showing a relationship between an angular variation of a crankshaft and opening/closing control of an intake valve in the dual fuel engine.

FIG. 10A is a process view of a conventional cycle of a combustion cycle of the engine.

FIG. 10B is a process view of a Miller cycle of a combustion cycle of an engine.

FIG. 11A is a perspective view showing an example of a variable intake valve timing mechanism in the related art.

FIG. 11B is a front view showing the example of the variable intake valve timing mechanism in the related art.

FIG. 12 is a perspective view showing another example of the variable intake valve timing mechanism in the related art.

FIG. 13A is a view showing still another example of the variable intake valve timing mechanism in the related art.

FIG. 13B is a view showing a relationship between an actuator and a link shaft in the variable intake valve timing mechanism in the related art shown in FIG. 13A.

Description of Embodiments

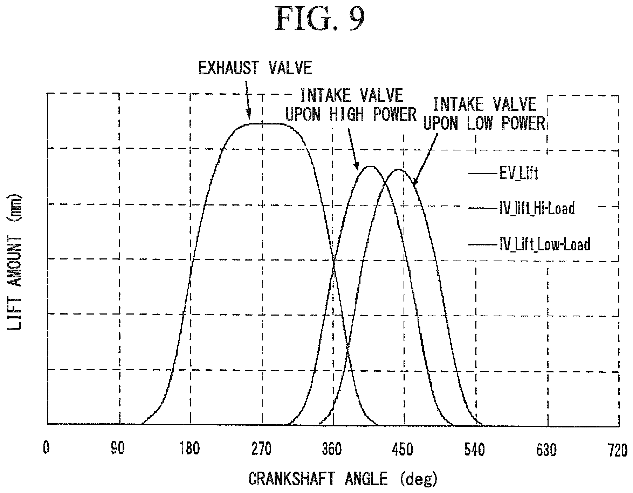

Hereinafter, as an engine system according to an embodiment of the present invention, a dual fuel engine 1 used as a marine internal combustion engine will be described with reference to the accompanying drawings. A relationship between an angular variation of a crankshaft and opening/closing control of an intake valve in the dual fuel engine will be described in relation to the Miller cycle with reference to FIG. 9.

FIG. 9 shows a relationship between an angle of the crankshaft and a lift amount of the intake valve and the exhaust valve of the engine. An origin 0 of a crank angle shown on a horizontal axis corresponds to compression top dead center, 0 to 180 degrees correspond to an expansion process, 180 degrees to 360 degrees correspond to an exhaust process, 360 degrees to 540 degrees correspond to an intake process, and 540 degrees to 720 degrees correspond to a compression process. In FIG. 9, a curve with a significant apex in the exhaust process represents a lift amount of the exhaust valve, and curves having small widths represent lift amounts of the intake valve upon high power and low power.

At low power, an opening/closing timing of the intake valve substantially coincides with the intake process, and the intake valve starts to open at about 340 degrees and closes at about 540 degrees. At high power, the opening/closing timing of the intake valve is controlled so as to be advanced using a VIVT mechanism. In the following embodiment, the valve closing timing of the intake valve is controlled to be advanced, according to the power, in a stepless manner from the initial 545 degrees and the valve closing timing is controlled to become 505 degrees at high power.

Hereinafter, as an engine system according to an embodiment of the present invention, a dual fuel engine used as a marine internal combustion engine will be described with reference to the accompanying drawings.

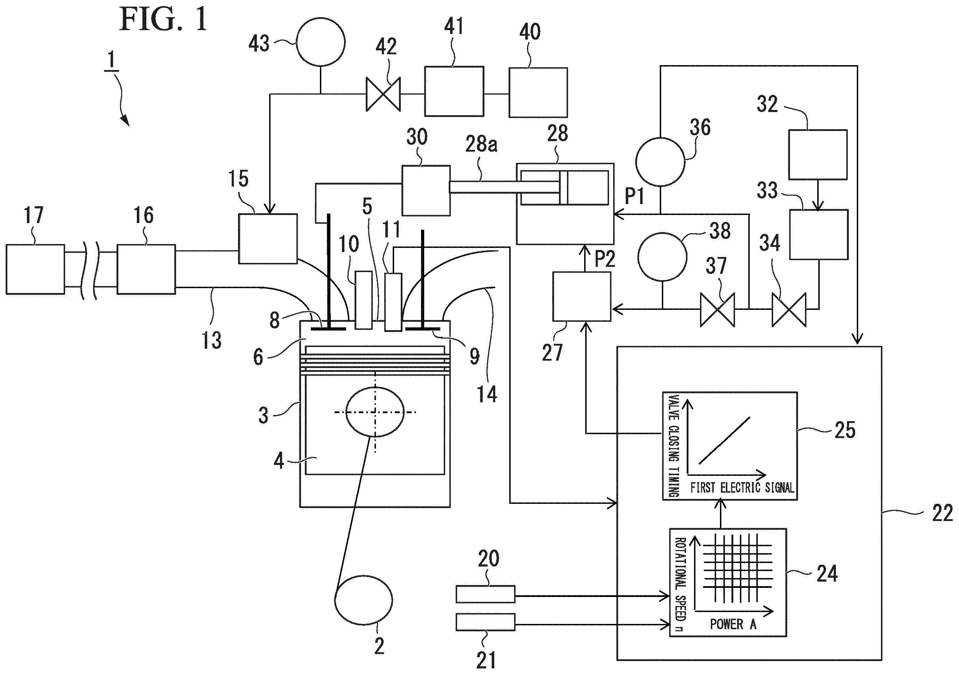

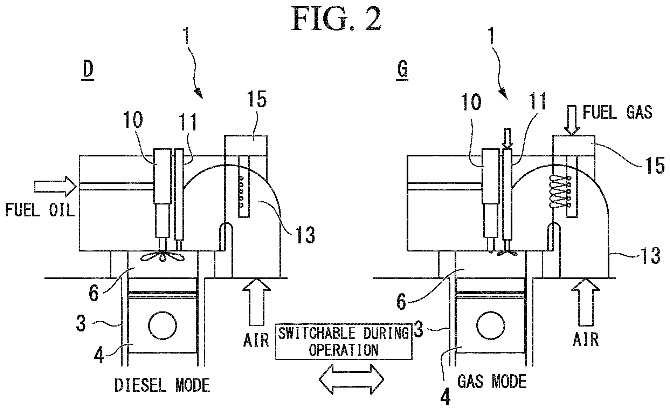

The marine dual fuel engine 1 (hereinafter, simply referred to as the engine 1) shown in FIGS. 1 and 2 is an engine including an engine for a diesel mode D and a gas mode G, and switchable to the diesel mode D and the gas mode G during an operation thereof. The dual fuel engine 1 shown in FIG. 1 includes a mechanism of a crankshaft 2 as an output shaft connected to a propeller or the like, and the crankshaft 2 is connected to a piston 4 installed in a cylinder block 3. A combustion chamber 6 is constituted by the piston 4 installed in the cylinder block 3 and an engine head 5.

The combustion chamber 6 is closed by an intake valve 8 and an exhaust valve 9 that are mounted on the engine head 5, and a fuel injection valve 10 used in the diesel mode D. In addition, a micro-pilot oil injection valve 11 used in the gas mode is installed on the engine head 5. An intake pipe 13 is connected to an intake port in which the intake valve 8 of the engine head 5 is installed, and an exhaust pipe 14 is installed in an exhaust port in which the exhaust valve 9 is installed. An electromagnetic valve 15 configured to control gas injection is installed in the intake pipe 13, and an air cooler 16 and a turbocharger 17 in communication with the exhaust pipe 14 are installed upstream of the electromagnetic valve 15.

Here, as shown in FIG. 2, the dual fuel engine 1 according to the embodiment can be switched between and operated in the diesel mode D and the gas mode G. In the diesel mode D, for example, a heavy fuel or the like used as fuel oil can be mechanically injected into compression air in the combustion chamber 6 from the fuel injection valve 10 to be ignited and combusted. In the gas mode G, a fuel gas such as natural gas or the like is injected into the intake pipe 13 by the electromagnetic valve 15 and premixed with an air flow, a fuel-air mixture is supplied into the combustion chamber 6, and pilot fuel is injected from the micro-pilot oil injection valve 11, in a state in which the fuel-air mixture is compressed, to be ignited and combusted. The micro-pilot oil injection valve 11 is, for example, electronically controlled and a small amount of pilot fuel is injected as a strong ignition source.

The engine 1 is started in the diesel mode D in which liquid fuel is injected into the combustion chamber 6 by the fuel injection valve 10. After it is recognized that a gas pressure higher than a reference value is supplied to the engine 1, operation is performed in the gas mode G in which the fuel gas is injected into the intake pipe 13 by the electromagnetic valve 15 to be mixed with air and then flowed into the combustion chamber 6, and the fuel gas is combusted.

The engine is switched to the diesel mode D again upon stopping and then it is stopped. The diesel mode D and the gas mode G can be switched other than upon starting and stopping.

The dual fuel engine 1 according to the embodiment includes a gas engine system configured to control power upon power-up in the gas mode G. A structure of the gas engine system will be further described.

In FIG. 1, a rotational speed sensor 20 and a torque sensor 21 are attached to the crankshaft 2, a rotational speed (a rotating speed) of the crankshaft 2 is measured by the rotational speed sensor 20, and an engine torque caused by the crankshaft 2 is measured by the torque sensor 21. As the torque sensor 21, for example, a sensor configured to detect a torque applied to a shaft using distortion may be used. Measurement data measured by each of the rotational speed sensor 20 and the torque sensor 21 is output as a signal to a control unit 22 configured to control the engine 1.

The control unit 22 detects an operation state of the engine 1 on the basis of the signal from the rotational speed sensor 20, the torque sensor 21, or the like. That is, provided that a rotational speed of the crankshaft 2 measured by the rotational speed sensor 20 is n and a torque measured by the torque sensor 21 is T, power A of the engine 1 is calculated by the following Equation (1) and Equation (2). Here, Lt is a rated output of the engine 1.

$$\text{Output } Lo = 2\pi Tn/60 \quad (1)$$

$$\text{Power } A = Lo/Lt \times 100 \quad (2)$$

Here, as a method of obtaining power of the engine 1, a method of estimating power of the engine 1 from information related to operation states of the engine 1 such as a feed rate of fuel or other, and a method of installing a torque sensor in a power transmission system of an output shaft of the engine 1 and obtaining power by measuring a real torque by the torque sensor are provided. In the gas engine, since a fuel gas is an elastic medium, it is relatively difficult to accurately obtain a feed rate of fuel than in liquid fuel. Therefore, it is preferable to calculate power by measuring an actual torque using the torque sensor 21.

In addition, when the rotational speed n is constant, the power A and the torque measurement value T has a proportional relationship. Under a condition in which the rotational speed n is constant, it is desirable to set advance amount of the closing timing of the intake valve 8 at a larger ratio as the power A is increased, i.e., as torque data T is increased.

A first map 24 for determining a first electric signal of an intake valve opening/closing timing and a second map 25 for determining an opening/closing timing corresponding to the first electric signal are previously created and stored in the control unit 22. The control unit 22 calculates the power A of the engine 1 using the above-mentioned Equations (1) and (2) on the basis of the rotational speed data n and the torque data T corresponding to the power A of the engine 1 and measured by the rotational speed sensor 20 and the torque sensor 21. Then, a first electric signal corresponding to the opening/closing timing of the intake valve 8 is selected in the first map 24 according to the rotational speed n and the power A. Then, the opening/closing timing of the intake valve 8 corresponding to the first electric signal is determined in the second map 25 on the basis of the first electric signal. A method of creating the first map 24 and the second map 25 will be described below.

The second electric signal of the opening/closing timing set in the control unit 22 is transmitted to an electropneumatic converter 27, and a signal of the opening/closing timing is converted into an air pressure by the electropneumatic converter 27. The air pressure is delivered to an actuator 28 to control driving of a variable intake valve timing mechanism 30. Air pressures P1 for driving and air pressures P2 for controlling are supplied from a first pressure-reducing regulator 34 and the electropneumatic converter 27 to the actuator 28.

Further, the air pressure supplied to the actuator 28 is compressed by an air compressor 32 and stored in an air tank 33. The air pressure in the air tank 33 is decompressed to a required pressure by the first pressure-reducing regulator 34. The pressure at this time is adjusted by changing a valve opening of the first pressure-reducing regulator 34, and supplied to the actuator 28 as the air pressure P1 for driving. When the pressure P1 measured by a pressure gauge 36 is a prescribed value or less, the engine 1 cannot be started.

The air pressure for driving the electropneumatic converter 27 is supplied from the first pressure-reducing regulator 34 and further decompressed by a second pressure-reducing regulator 37. The electropneumatic converter 27 supplies the air pressure corresponding to the input second electric signal of the opening/closing timing to the actuator 28 as the air pressure P2 for adjusting operation of the actuator 28. A rod 28a of the actuator 28 is operated to actuate the variable intake valve timing mechanism 30 on the basis of the air pressures P1 and P2.

The actuator 28 is, for example, a known P cylinder (a cylinder with a positioner), and controls advancing and retreating of the rod 28a on the basis of the pressures P1 and P2 input from the first pressure-reducing regulator 34 and the electropneumatic converter 27. As a movement length of the rod 28a of the actuator 28 is varied, driving of the variable intake valve timing mechanism 30 is controlled to advance or retard the closing timing of the intake valve 8 from intake bottom dead center, thereby a decrease in compression ratio is controlled.

Since a period between the valve opening timing and the valve closing timing of the intake valve 8 is not varied, the valve closing timing also advances from intake top dead center at the same time as the valve opening timing advances from intake bottom dead center. Moreover, in the present invention, it is possible to suppress the knocking and shorten the power-up time by changing the valve opening and valve closing timing according to the power of the engine 1. The opening/closing timing of the intake valve 8 is set by the first map 24 and the second map 25 in the control unit 22 on the basis of the power A and the rotational speed n of the engine 1, and the valve opening/closing timing of the intake valve 8 is adjusted by the actuator 28 and the variable intake valve timing mechanism 30 such that the knocking can be suppressed.

A configuration of the variable intake valve timing mechanism 30 is known in the related art, and includes the same configuration as shown in FIGS. 11 to 13. That is, in the variable intake valve timing mechanism 30, for example, a link shaft, in which a rotation angle range is set by a movement length of the rod 28a of the actuator 28 via a sector gear, and a cam shaft including an eccentric cam are disposed parallel to each other. An exhaust swing arm is connected to the link shaft, and an intake swing arm is connected to a tappet shaft installed at an eccentric position of the link shaft. The intake valve 8 is connected to the intake swing arm via a push rod and a rocker arm, and the exhaust valve 9 is connected to the exhaust swing arm via a push rod or a rocker arm.

A distance between the cam shaft and the intake swing arm is varied by a rotation angle of the tappet shaft according to rotation of the link shaft, and a timing at which the eccentric cam of the cam shaft begins to abut is varied. Accordingly, the valve closing timing is changed to be advanced (or to be retarded). The valve closing timing of the intake valve 8 becomes faster as a distance from the tappet shaft to a center of the cam shaft is increased. A rotation angle of the tappet shaft is changed according to the movement length of the rod 28a of the actuator 28. The movement length of the rod 28a is arbitrarily changed by the air pressures P1 and P2 for control supplied to the actuator 28.

A magnitude of the advance corresponding to the opening/closing timing of the intake valve 8 is determined as a timing at which the eccentric cam of the cam shaft starts to abut the intake swing arm connected to the tappet shaft of the link shaft.

Further, as a rotary apparatus of the tappet shaft in the variable intake valve timing mechanism 30, a servo motor (not shown) may be used instead of the actuator 28. In this case, a signal of the opening/closing timing transmitted from the second map 25 of the control unit 22 is input to the servo motor. As the servo motor can rotate the link shaft by an amount corresponding to the received signal and turn the tappet shaft to approach or move away from the cam shaft, the opening/closing timing of the intake valve 8 can be changed. When the servo motor is used, a configuration of the actuator 28 and the air compressor 32 to a pressure gauge 38 is not necessary. In addition, the servo motor is driven by the controller instead of the electropneumatic converter 27.

In addition, a mechanism configured to supply a fuel gas to the electromagnetic valve 15 that controls gas injection into the intake pipe 13 will be described. In FIG. 1, a fuel gas such as natural gas or the like is supplied to a gas vaporizer 41 from an LNG gas tank 40 in which the fuel gas is stored, and further, a gas pressure is decompressed to a required gas pressure by a gas regulator 42.

The pressure at this time is displayed on a pressure gauge 43, adjusted by changing the valve opening of the gas regulator 42, and injected into the intake pipe 13 from the electromagnetic valve 15 as a fuel gas for combustion. Turbocharged air cooled by the air cooler 16 is mixed with the fuel gas in the intake pipe 13 to be supplied into the combustion chamber 6. Upon power-up, a feed rate of the fuel gas is increased by the operation of the electromagnetic valve 15.

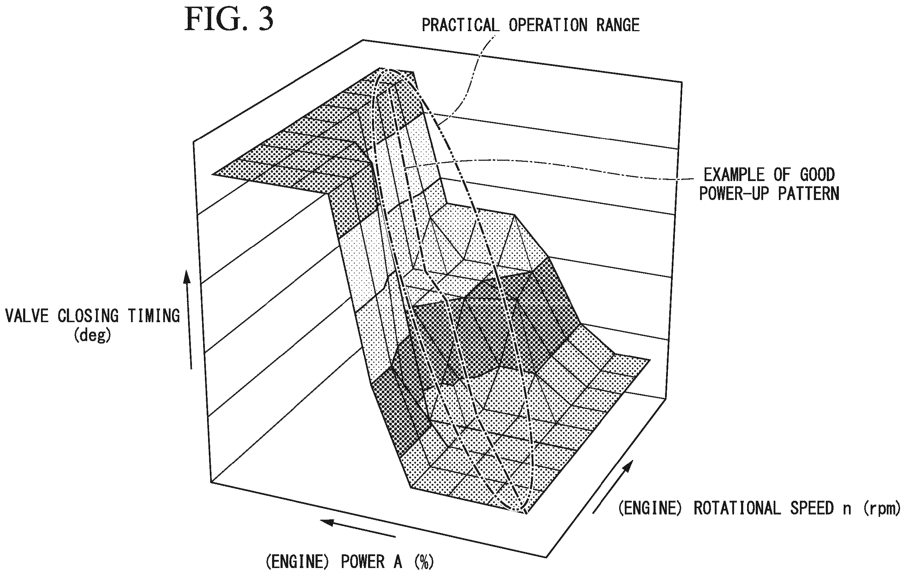

Next, a method of creating the first map 24 and the second map 25 stored in the control unit 22 will be described. FIG. 3 is a 3-dimensional map showing details of the first map 24 that determines the valve closing timing of the intake valve 8 according to the rotational speed n of the crankshaft 2 and the power A of the engine 1.

The first map 24 has been created on the basis of processes of the following experimental procedures (1) to (18).

In the experiment, the dual fuel engine 1 of the same model to be actually used was used.

(1) The engine 1 is started, the rotational speed n is set to 400 rpm, the power A is set to 10%, and a valve closing timing of the intake valve 8 is set to 545 degrees (in terms of structure, the latest valve closing timing).
(2) Then, occurrence of abnormal combustion referred to as knocking generated during driving of the engine 1 and an exhaust temperature at that time are measured.

The occurrence of knocking is detected by a knocking sensor (not shown) attached to each engine head 5. Upon occurrence of a knocking phenomenon, a waveform is obtained by overlapping a conventional combustion waveform and a high-frequency pressure variation.

In addition, the exhaust temperature upon measurement of knocking is measured by a temperature sensor attached to the exhaust pipe 14.

(3) After the completion of measurement of the exhaust temperature upon measurement of the knocking, the valve closing timing of the intake valve 8 is reduced by 5 degrees, and the measurement of (2) is performed again. The measurement is repeatedly performed untile the valve closing timing is changed to 500 degrees (in terms of structure, the earliest valve closing timing).

(4) After the measurement of (3) is completed, the power is increased by 10% to 110% by stages, and the measurements of (2) and (3) are repeatedly performed again.

(5) According to the measurements of (1) to (4), it is determined that the knocking can be suppressed and the engine 1 can be safely operated when knocking intensity is a reference value or less and an exhaust temperature is 500 °C or less.

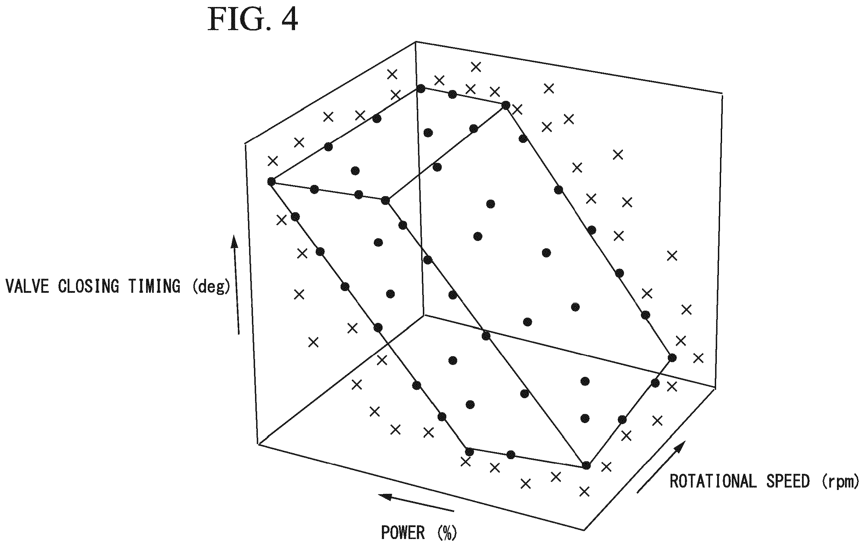

(6) From the measurement results of (5), in a 3-dimensional graph of FIG. 4 in which an X axis represents power A, a Y axis represents a rotational speed n, and a Z axis represents an opening/closing timing, ● (a black circle) is plotted on a measurement point at which safe operation is possible, and x is plotted on a measurement point that is not safe. Accordingly, a knocking suppression range in a relationship between the power A, the rotational speed n and the opening/closing timing can be selected.

(7) The measurement processes of (1) to (6) are performed by raising the rotational speed n by 100 rpm to 900 rpm, and a range in which safe operation can be performed is measured at each rotational speed n.

(8) FIG. 4 shows a graph in which the measurement results of (7) are represented by three axes of the rotational speed n, the power A and the opening/closing timing. In FIG. 4, a range surrounded by straight lines is a range in which knocking can be suppressed and the engine 1 can be safely operated.

(9) Next, in the range of the 3-dimensional region surrounded by the straight lines shown in FIG. 4 measured according to the experiments of (1) to (8) and in which the engine can be safely operated, an experiment is further performed in order to search for a setting in which nitrogen oxides (hereinafter, referred to as NOx) are a reference value or less and thermal efficiency is highest.

The rotational speed n of the engine is set to 400 rpm, the power A is set to 10%, and the valve closing timing of the intake valve 8 is set to 545 degrees.

(10) Next, NOx and thermal efficiency are measured. NOx is measured using an exhaust gas analyzer attached to the exhaust pipe 14. The thermal efficiency is calculated by the following equation (3) according to an output calculated by a fuel flow rate L measured from a fuel flowmeter attached to the fuel pipeline and the measurement results of the torque sensor 21.

$$\text{Thermal efficiency } \eta = 360Lo/H/L \qquad (3)$$

Here, H: lower calorific value of fuel gas $(J/Nm^3)$
Lo: output at current time
L: fuel flow rate

(11) After completion of the measurement of (10), the valve closing timing of the intake valve 8 is reduced by 5 degrees, and the measurement of (10) is performed again. The measurement is repeatedly performed until the valve closing timing is changed to 505 degrees (see FIG. 9).

(12) The power is increased by 10% to 110% by stages after the measurements of (10) and (11) are completed, and the measurements of (10) and (11) are repeatedly performed again. The valve closing timing is changed within the range shown in FIG. 4 in which the engine can be safely operated.

(13) The measurements of (9) to (12) are performed by increasing the rotational speed n by 100 rpm to 900 rpm by stages, and a measurement point having the highest performance is determined at each rotational speed.

(14) Then, the valve closing timing of the intake valve 8 when NOx is a predetermined value or less and the thermal efficiency is highest is set for each rotational speed n and each power A. According to the results, a draft of the first map shown in FIG. 3 is created.

(15) Further, knocking is detected by raising the rotational speed n and the power A using an arbitrary power-up pattern. The power-up pattern is a variation state of the power A and the rotational speed n per unit time, and varied according to specifications (a shape and a rotational speed) of a propeller of a marine propulsion unit.

(16) The valve closing timing of the measurement point at which the knocking intensity detected in (15) is a reference value or more is decreased by 3 degrees.

(17) Next, the processes of (15) and (16) are repeated until the knocking intensity is the reference value or less, and the valve closing timing at which the knocking is suppressed is determined. The thermal efficiency is deteriorated when the valve closing timing is reduced. Settings of the valve closing timing at which the NOx and the knocking intensity are the reference values or less and a result of highest thermal efficiency is obtained are set as values of the rotational speed n and the power A.

(18) The valve closing timing at which the knocking is suppressed is measured at each of the rotational speed n and the power A from (17), and as a result, the first map 24 as shown in FIG. 3 was finally created.

In FIG. 3, the valve closing timing according to the rotational speed n and the power A is shown as a graph of a 3-dimensional plane, and an upward direction in FIG. 3 is a direction in which the valve closing timing is further reduced (larger advance amount). On the 3-dimensional plane, a region shown by two-dot chain lines is a practical operation range used in operation of an actual marine propulsion unit, and an example of a good power-up pattern is shown by dashed lines. Upon the power-up within the practical operation range, the valve closing timing is controlled to be advanced largely as the power of the engine is increased.

In an example of the good power-up pattern shown by the dashed lines, the advance amount is minimized at a right lower position in FIG. 3 at which the rotational speed n and the power A are small, and the advance amount is increased as the rotational speed n and the power A are increased. While a region in which the advance amount is constant on the way is also present in the pattern, the advance amount is increased as the power is increased as a whole. Further, since the power is obtained by a product of the torque and the rotational speed, it can be expressed that the advance amount is increased as the torque of the output shaft is increased.

Next, the second map 25 was created by the following experiment.

When rotation of the variable intake valve timing mechanism 30 is controlled by the actuator 28, the second map 25 is created by the following sequence.

(1) The valve closing timing is changed by the actuator 28, and the pressure when each valve closing timing is changed is measured.
(2) A second electric signal required for supply of the pressure of (1) is determined from the specification of the electropneumatic converter 27.
(3) From the results of (1) and (2), the second map 25 in which the first electric signal selected from the first map 24 is shown on a horizontal axis and the valve closing timing (the second electric signal) is shown on a vertical axis is created.

Note that the above-mentioned description is the case in which the actuator 28 is used, and the case in which rotation of the variable intake valve timing mechanism 30 is controlled by a servo motor instead of the actuator 28 is as follows.

(1) The valve closing timing is changed on the basis of the servo motor, and the second electric signal when each valve closing timing is changed is measured.
(2) The second map 25 in which the first electric signal is shown in a horizontal axis and the valve closing timing (the second electric signal) is shown on a vertical axis is created from the results of (1).

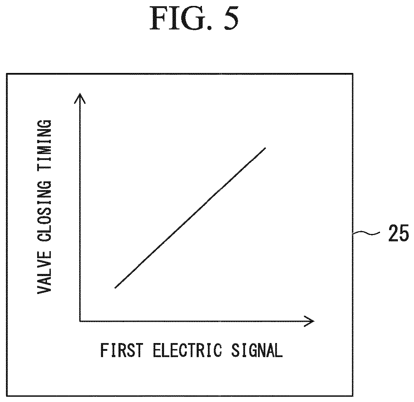

Details of the second map 25 are shown in FIG. 5. The second map 25 is a map representing a relationship between the valve closing timing (the second electric signal) and the first electric signal.

A power-up apparatus of the dual fuel engine 1 according to the embodiment includes the above-mentioned configuration, and a power-up method will be described below.

In the gas mode G, the air supplied from the turbocharger 17 is premixed with the fuel gas injected from the electromagnetic valve 15 while being cooled by the air cooler 16, and supplied into the combustion chamber 6 in the cylinder block 3. In the intake process, the intake valve 8 is closed before the piston 4 arrives at bottom dead center, and a fuel-air mixture in the combustion chamber 6 becomes a negative pressure and a temperature and a compression ratio of the fuel-air mixture are lowered as the piston 4 is further lowered. Accordingly, the knocking can be suppressed.

In the compression process, the fuel-air mixture in the combustion chamber 6 is compressed by the piston 4, in the expansion process, fuel is injected from the micro-pilot oil injection valve 11 to be ignited and a combustion gas is expanded to lower the piston 4 to bottom dead center, and in an exhaust process, the piston 4 is raised to top dead center to exhaust the combustion gas.

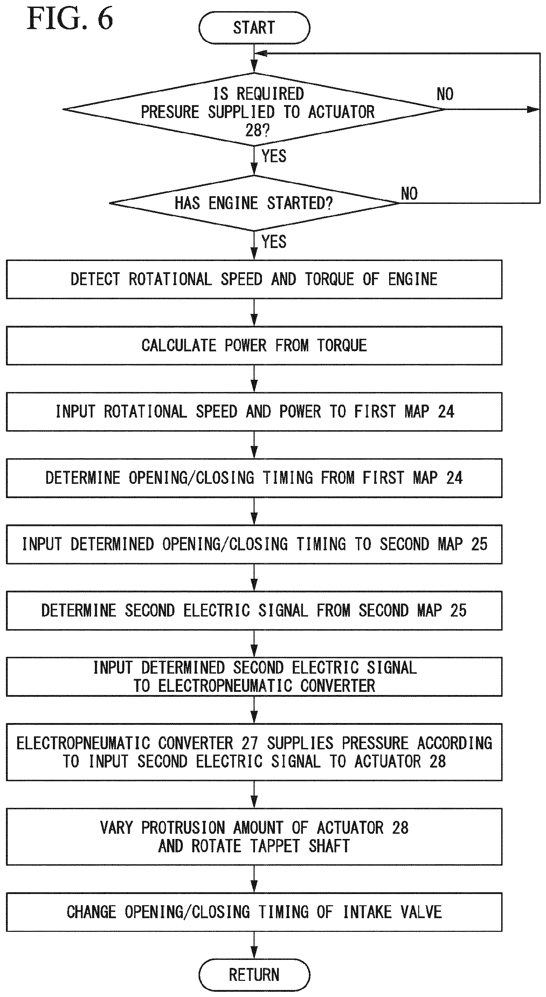

A method of controlling such a gas mode G will be described along a flowchart of a method of changing an opening/closing timing of the intake valve 8 shown in FIG. 6.

The pressure gauge 36 measures and determines whether a required pressure P1 is supplied to the actuator 28 upon starting of the engine 1, and the engine 1 is not started when the measured value is a prescribed value or less. In addition, when the pressure P1 becomes a prescribed value or less during operation of the engine, the engine 1 is stopped. Control of the opening/closing timing of the intake valve 8 is started when the engine 1 is started regardless of the operation mode of the engine 1. It is determined that a starting period is started when a measurement value signal of the rotational speed n is input to the control unit 22 from the rotational speed sensor 20.

A state of the engine 1 is detected at a predetermined interval by measuring the rotational speed n and the torque T using the rotational speed sensor 20 and the torque sensor 21 at each predetermined interval. The detected rotational speed n and the torque T are input to the control unit 22 and the power A is calculated using the above-mentioned Equations (1) and (2). In the control unit 22, the measurement values of the rotational speed n and the power A are input to the first map 24 that determines an intake valve opening/closing timing. The intake valve opening/closing timing corresponding to the input power A and the rotational speed n is determined by the first map 24, and is output as the first electric signal.

The first electric signal is input to the second map 25, the opening/closing timing corresponding to the first electric signal is set, and the second electric signal corresponding to the opening/closing timing is determined by the second map 25 and input to the electropneumatic converter 27. The opening/closing timing is set as the advance amount of the valve opening timing and the valve closing timing of the intake valve 8 from intake bottom dead center and intake top dead center of the piston 4.

The advance amount of the valve closing and valve opening timings of the intake valve 8 in the variable intake valve timing mechanism 30 is adjusted to be varied continuously or by multiple stages according to the rotational speed n and the power A of the engine 1. While the advance of the valve closing and valve opening timings of the intake valve 8 may also be two stages of advance "1" and non-advance "0", the knocking can be continuously suppressed by employing an operation of setting the advance amount variably continuously or by multiple stages by the first map 24 and the second map 25 using the rotational speed n and the power A as parameters. Accordingly, a power-up time can be shortened because a power-up speed can be accelerated according to an increase in power.

In the electropneumatic converter 27, the air pressure P2 for control corresponding to the input second electric signal is supplied to the actuator 28. A movement length of the rod 28a of the actuator 28 is varied by the air pressure P2 for control supplied to the actuator 28, and the tappet shaft of the variable intake valve timing mechanism 30 is rotated by a required angle. The movement length of the rod 28a is varied according to an amount of the air pressure P2 for control supplied to the actuator 28.

In the variable intake valve timing mechanism 30, a distance between the intake valve swing arm connected to the tappet shaft and the cam shaft is varied by rotation of the tappet shaft, and a timing when the eccentric cam installed on the cam shaft starts to abut is varied. An opening/closing timing of the intake valve 8 upon power-up is varied according to this variation. The knocking can be suppressed by the variation of the opening/closing timing of the intake valve 8.

In the embodiment, the state of the engine 1 upon the power-up is detected according to the power A and the rotational speed n at each predetermined interval, the opening/closing timing of the intake valve 8 at which the knocking can be suppressed is selected using the first map 24 and the second map 25 of the control unit 22, the opening/closing timing of the intake valve 8 is advanced by the actuator 28 and the variable intake valve timing mechanism 30, and thereby the power-up time can be shortened while suppressing the knocking.

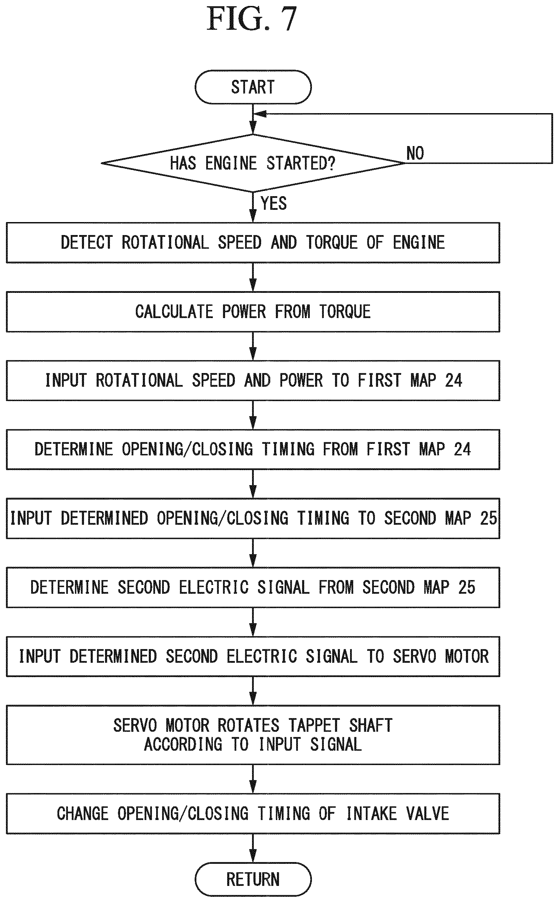

FIG. 7 is a view showing a flowchart when rotation of the tappet shaft is controlled using a servo motor instead of the electropneumatic converter 27 and the actuator 28. In this case, like the case shown in FIG. 6, measurement values of the rotational speed n and the torque T that are detected at each predetermined interval are input to the control unit 22, and the opening/closing timing of the intake valve 8 according to the power-up state of the engine 1 is sequentially selected using the first map 24 and the second map 25.

The second electric signal transmitted from the second map 25 is input to the servo motor via a controller. The servo motor calculates a rotation position corresponding to the input second electric signal, the tappet shaft is rotated by rotating the link shaft by a predetermined angle, and the opening and closing timings of the intake valve 8 are changed from bottom dead center and top dead center.

Next, power-up responsiveness in the gas mode G of the dual fuel engine 1 according to the embodiment of the present invention was tested.

During a power-up test, an air temperature was set to 18°C, 25°C, 36°C and 37°C. Then, in the gas mode G of the engine 1, elapsed time, the rotational speed n and the torque T of the engine 1 from power-up starting in an idle rotation state to arrival at a rated power (a rated speed) were measured at predetermined intervals.

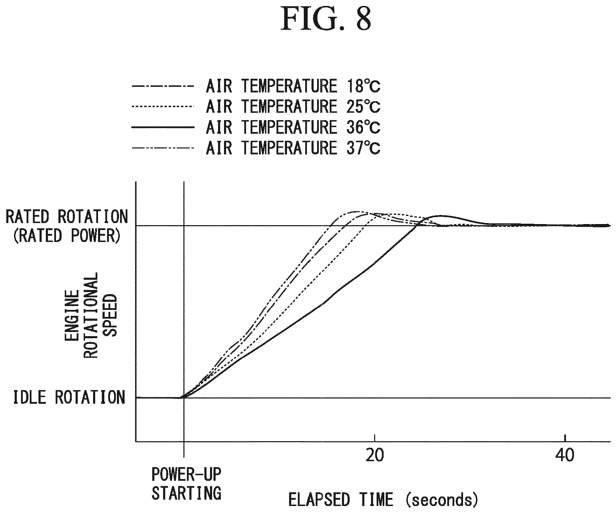

The results are shown in FIG. 8. While in the dual fuel engine in the related art, it took about 10 minutes for power-up from the power-up starting to the rated power, in the test example of the embodiment, the rated power was reached in about 20 seconds even when the air temperature was any one of 18°C, 25°C, 36°C and 37°C. For this reason, a power-up speed was remarkably improved.

As described above, according to the dual fuel engine 1 of the embodiment, the power-up time can be shortened by swhiching the mode from the diesel mode D to the gas mode G upon power-up and sequentially advancing the opening/closing timing of the intake valve 8 such that the knocking can be suppressed according to the first map 24 and the second map 25 on the basis of the rotational speed n and the torque T of the engine 1, which were measured at predetermined intervals.

In addition, in the embodiment, since the opening/closing timing is selected within a range of a 3-dimensional map shown in FIG. 4, generation of NOx can be reduced.

Moreover, efficiency upon low power was improved by optimizing the opening/closing timing of the intake valve 8.

The engine system according to the present invention is not limited to the dual fuel engine 1 according to the above-mentioned embodiment, and modifications, substitutions, or the like, may be made without departing from the spirit of the present invention. Hereinafter, while the variant or the like of the present invention has been described, the same or similar parts, members, or the like, described in the above-mentioned embodiment are designated by the same reference numerals and description thereof will be omitted.

The engine system according to the present invention is not limited to the dual fuel engine 1 that is switchable between the diesel mode D in which liquid fuel is the main fuel and the gas mode G in which a gas is the main fuel, and may also be applied to a gas engine using a gas as a fuel. In this case, the present invention may also be applied to a generator using a gas as the main fuel. In this case, the generator is connected to an output shaft instead of the torque sensor, and power of the output shaft may be measured according to electric power generated by the generator.

Moreover, the present invention is not limited to the power-up pattern of the marine engine and may be applied to a power-up pattern used in a vehicle or emergency generator, or the like.

In addition, while changes of the valve opening timing and the valve closing timing of the intake valve 8 upon power-up are set by advancing the valve opening timing and the valve closing timing of the intake valve 8 from intake bottom dead center and intake top dead center of the piston 4 in the above-mentioned embodiment, the present invention is not limited to the advance and may be set by retarding the valve opening timing and the valve closing timing of the intake valve 8. It is possible to obtain an effect of lowering a compression ratio of a fuel-air mixture even in any one of the advance and the retard. However, since the retard of the closing timing of the intake valve 8 may be influenced by blowing back the fuel-air mixture to the intake system, it is more preferable to employ the advance of the opening/closing timing of the intake valve 8 as actually applied to the engine 1.

Further, although the variable intake valve timing mechanism 30 changes both of the valve opening timing and the valve closing timing and opening period of the intake valve is not changed in the above-mentioned embodiment, any one or both of the valve closing timing and the valve opening timing of the intake valve 8 may be selected and controlled to be changed.

Industrial Applicability

The present invention provides an engine system capable of shortening a power-up time while suppressing knocking upon power-up using premixed gas of fuel gas and air, and a control method therefor.

Description of Reference Signs

1 Dual fuel engine
8 Intake valve
9 Exhaust valve
15 Electromagnetic valve
20 Rotational speed sensor
21 Torque sensor
22 Control unit
24 First map
25 Second map

27 Electropneumatic converter
28 Actuator
30 Variable intake valve timing mechanism

**Claims**

1. An engine system comprising a 4-stroke engine using a gas as fuel and including a micro-pilot oil injection valve (11) to ignite a fuel-air mixture of gas and air in a combustion chamber, and including an output shaft of the engine that is connected to a propeller of a marine propulsion unit,

   wherein in an intake pipe of the engine, a turbocharger configured to perform turbocharging and an air cooler configured to cool air from the turbocharger before the air is supplied to the intake pipe are provided,
   the engine system comprising:

   a torque sensor (21) configured to measure a torque of the output shaft of the engine;
   a rotational speed sensor (20) configured to measure a rotational speed of the output shaft of the engine;
   a control unit (22) configured to obtain power of the output shaft from a torque measurement value by the torque sensor and a rotational speed measurement value by the rotational speed sensor, and configured to set change of a closing timing of an intake valve (8) of the engine when power of the output shaft of the engine is increased; and
   a variable intake valve timing mechanism (30) configured to change the closing timing of the intake valve according to the closing timing of the intake valve set by the control unit and configured to adjust advance amount of the closing timing of the intake valve from bottom dead center,
   **characterized in that**:
   control of lowering a compression ratio of a fuel-air mixture of the gas and air in the engine is performed by the variable intake valve timing mechanism according to an increase in rotational speed of the output shaft of the engine and an increase in power of the output shaft of the engine.

2. The engine system according to Claim 1, wherein adjustment of the advance amount of the closing timing of the intake valve is performed continuously or by multiple stages by the variable intake valve timing mechanism.

3. The engine system according to Claim 2, wherein the advance amount determined in the control unit is set from a value of the advance amount determined using as parameters a plurality of data on power and rotational speed of the output shaft which are previously measured.

4. A control method for an engine system including a 4-stroke engine using a gas as fuel and including a micro-pilot oil injection valve (11) to ignite a fuel-air mixture of gas and air in a combustion chamber wherein in an intake pipe of the engine, a turbocharger configured to perform turbocharging and an air cooler configured to cool air from the turbocharger before the air is supplied to the intake pipe are provided, and an output shaft of the engine is connected to a propeller of a marine propulsion unit, the method comprising:

a process of obtaining power of the output shaft of the engine from a torque measurement value of the output shaft measured by a torque sensor (21) and a rotational speed measurement value of the output shaft measured by a rotational speed sensor (20), and of setting change of a closing timing of an intake valve (8) of the engine when power of the output shaft of the engine is increased; and
a process of mechanically changing the closing timing of the intake valve according to the set closing timing of the intake valve and of adjusting advance amount of the closing timing of the intake valve from bottom dead center,
the method being **characterized in that**
a compression ratio of a fuel-air mixture of the gas and air in the engine is lowered by mechanically changing the closing timing of the intake valve according to an increase in rotational speed of the output shaft of the engine and an increase in power of the output shaft of the engine.

**Patentansprüche**

1. Motorsystem, das einen Viertaktmotor, der ein Gas als Kraftstoff verwendet, aufweist und ein Mikropilot-Öleinspritzventil (11) umfasst, um ein Kraftstoff-Luftgemisch von Gas und Luft in einer Brennkammer zu entzünden, und eine Ausgangswelle des Motors, die mit einem Propeller einer Schiffsantriebseinheit verbunden ist, umfasst,

wobei in einer Einlassleitung des Motors ein Turbolader, der so konfiguriert ist, dass er das Turboladen ausführt, und ein Luftkühler, der so konfiguriert ist, dass er Luft des Turboladers, bevor die Luft der Einlassleitung zugeführt wird, kühlt, vorgesehen sind, wobei

das Motorsystem folgendes umfasst:

einen Drehmomentsensor (21), der so konfiguriert ist, dass er ein Drehmoment der Ausgangswelle des Motors misst;
ein Rotationsgeschwindigkeitssensor (20), der so konfiguriert ist, dass er eine Rotationsgeschwindigkeit der Ausgangswelle des Motors misst;
eine Steuereinheit (22), die so konfiguriert ist, dass sie die Leistung der Ausgangswelle von einem Drehmomentmesswert durch den Drehmomentsensor und einen Rotationgeschwindigkeitsmessungswert durch den Rotationsgeschwindigkeitssensors erhält, und so konfiguriert ist, dass sie eine Veränderung eines Schließzeitpunktes eines Einlassventils (8) des Motors einstellt, wenn die Leistung der Ausgangswelle des Motors erhöht ist; und
einen variablen Einlassventilzeitpunktmechanismus (30), der so konfiguriert ist, dass er den Schließzeitpunkt des Einlassventils gemäß des Schließzeitpunkts des Einlassventils, der durch die Steuereinheit eingestellt ist, verändert, und so konfiguriert ist, dass er den Voreilbetrag des Schließzeitpunktes das Einlassventil von dem unteren Totpunkt anpasst,
**dadurch gekennzeichnet, dass**:
die Steuerung des Verringerns eines Kompressionsverhältnisses eines Kraftstoff-Luftgemisches von Gas und Luft in dem Motor durch den variablen Einlassventilzeitpunktmechanismus gemäß eines Erhöhens der Rotationsgeschwindigkeit der Ausgangswelle des Motors und eines Erhöhens der Leistung der Ausgangswelle des Motors ausgeführt wird.

2. Motorsystem nach Anspruch 1, wobei eine Einstellung des Voreilbetrags des Schließzeitpunktes des Einlassventils kontinuierlich oder mehrstufig durch den variablen Einlassventilzeitpunktmechanismus ausgeführt ist.

3. Motorsystem gemäß Anspruch 2, wobei der Voreilbetrag, die in der Steuereinheit bestimmt ist, von einem Wert des Voreilbetrags, der als Parameter eine Vielzahl von Daten an Leistung und Rotationsgeschwindigkeit der Ausgangswelle, die vorher gemessen werden, verwendet, eingestellt ist.

4. Verfahren zum Steuern eines Motorsystems, das einen Viertaktmotor, der ein Gas als Kraftstoff verwendet, umfasst und ein Mikropilot-Öleinspritzventil (11) für das Entzünden eines Kraftstoff-Luftgemisches von Gas und Luft in einer Brennkammer verwendet, wobei in einer Einlassleitung des Motors ein Turbolader, der so konfiguriert ist, dass er das Turboladen ausführt, und ein Luftkühler, der so konfiguriert ist, dass er Luft des Turboladers, bevor die Luft der Einlassleitungen zugeführt wird, kühlt, vorgesehen sind, und eine Ausgangswelle des Motors mit einem Propeller einer Schiffsantriebseinheit verbunden ist, wobei das Verfahren folgendes umfasst:

einen Prozess des Erhaltens einer Leistung der Ausgangswelle des Motors von einem Drehmomentmesswert der Ausgangswelle, der durch einen Drehmomentsensor (21) gemessen wird, und einen Rotationsgeschwindigkeitsmesswert der Ausgangswelle, der durch einen Rotationsgeschwindigkeitssensor (20) gemessen wird, und des Einstellens eines Veränderns des Schließzeitpunktes eines Einlassventils (8) des Motors, wenn eine Leistung der Ausgangswelle des Motors erhöht ist; und

ein Prozess des mechanischen Veränderns des Schließzeitpunktes des Einlassventils gemäß des eingestellten Schließzeitpunktes des Einlassventils und des Anpassens des Voreilbetrags des Schließzeitpunktes des Einlassventils von dem unteren Totpunkt, wobei

das Verfahren **dadurch gekennzeichnet ist, dass**

ein Kompressionsverhältnis eines Kraftstoff-Luftgemisches von Gas und Luft in dem Motor durch das mechanische Verändern des Schließzeitpunktes des Einlassventils gemäß eines Erhöhens in der Rotationsgeschwindigkeit der Ausgangswelle des Motors und eines Erhöhens der Leistung der Ausgangswelle des Motors verringert wird.

## Revendications

**1.** Système de moteur comprenant un moteur à quatre temps utilisant un gaz comme combustible et incluant une vanne micro-pilote d'injection d'huile (11) pour enflammer un mélange air-combustible de gaz et d'air dans une chambre de combustion, et incluant un arbre de sortie du moteur qui est connecté à un propulseur d'une unité de propulsion marine,

où dans un tuyau d'entrée du moteur, un turbocompresseur configuré pour effectuer la suralimentation et un refroidisseur d'air configuré pour refroidir l'air du turbocompresseur avant que l'air ne soit fourni au tuyau d'entrée sont prévus, le système de moteur comprenant :

un capteur de couple (21) configuré pour mesurer un couple de l'arbre de sortie du moteur ;
un capteur de vitesse de rotation (20) configuré pour mesurer une vitesse de rotation de l'arbre de sortie du moteur ;

une unité de contrôle (22) configurée pour obtenir la puissance de l'arbre de sortie à partir d'une valeur de mesure de couple mesurée par le capteur de couple et d'une valeur de mesure de la vitesse de rotation mesurée par le capteur de vitesse de rotation, et configurée pour définir la modification d'une temporisation de fermeture d'une soupape d'admission (8) du moteur lorsque la puissance de l'arbre de sortie du moteur est augmentée ; et

un mécanisme de temporisation de soupape d'admission variable (30) configuré pour modifier la temporisation de fermeture de la soupape d'admission selon la temporisation de fermeture de la soupape d'admission définie par l'unité de contrôle et configuré pour ajuster l'avance de la temporisation de fermeture de la soupape d'admission à partir du point mort bas,

**caractérisé en ce que** :

le contrôle de la réduction d'un taux de compression d'un mélange air-combustible du gaz et de l'air dans le moteur est effectué par le mécanisme de temporisation de soupape d'admission variable selon une augmentation de la vitesse de rotation de l'arbre de sortie du moteur et une augmentation de la puissance de l'arbre de sortie du moteur.

**2.** Système de moteur selon la revendication 1, où le réglage de l'avance de la temporisation de fermeture de la soupape d'admission est effectué en continu ou par de multiples étapes par le mécanisme de temporisation de soupape d'admission variable.

**3.** Système de moteur selon la revendication 2, où l'avance déterminée dans l'unité de contrôle est définie à partir d'une valeur de l'avance déterminée en utilisant comme paramètres une pluralité de données sur la puissance et la vitesse de rotation de l'arbre de sortie préalablement mesurées.

**4.** Procédé de commande pour un système de moteur incluant un moteur à quatre temps utilisant un gaz comme combustible et incluant une vanne d'injection d'huile micro-pilote (11) pour enflammer un mélange air-combustible de gaz et d'air dans une chambre de combustion où, dans un tuyau d'entrée du moteur, un turbocompresseur configuré pour effectuer la suralimentation et un refroidisseur d'air configuré pour refroidir l'air du turbocompresseur avant que l'air ne soit fourni au tuyau d'entrée sont prévus, et un arbre de sortie du moteur est connecté à un propulseur d'une unité de propulsion marine, le procédé comprenant :

une procédure d'obtention de la puissance de l'arbre de sortie du moteur à partir d'une valeur de mesure de couple de l'arbre de sortie mesurée par un capteur de couple (21) et d'une valeur de mesure de la vitesse de rotation de l'arbre de sortie mesurée par un capteur de vitesse de rotation (20), et de définition de la modification d'une temporisation de fermeture d'une soupape d'admission (8) du moteur lorsque la puissance de l'arbre de sortie du moteur est augmentée ; et

une procédure de modification mécanique de la temporisation de fermeture de la soupape d'admission selon la temporisation de fermeture de la soupape d'admission définie et d'ajustement de l'avance de la temporisation de fermeture de la soupape d'admission à partir du point mort bas,

le procédé étant **caractérisé en ce que**

un taux de compression d'un mélange air-combustible de gaz et d'air dans le moteur est réduit en modifiant mécaniquement la temporisation de fermeture de la soupape d'admission selon une augmentation de la vitesse de rotation de l'arbre de sortie du moteur et une augmentation de la puissance de l'arbre de sortie du moteur.

FIG. 1

# FIG. 2

FIG. 3

PRACTICAL OPERATION RANGE

EXAMPLE OF GOOD
POWER-UP PATTERN

VALVE CLOSING TIMING
(deg)

(ENGINE) ROTATIONAL SPEED n (rpm)

(ENGINE) POWER A (%)

EP 3 431 740 B1

FIG. 4

FIG. 5

## FIG. 6

```
                          ┌─────────┐
                          │  START  │
                          └─────────┘
                               │
                               ▼
                    ╱──────────────────────╲
                   ╱      IS REQUIRED        ╲      NO
                  ╱  PRESURE SUPPLIED TO ACTUATOR ╲──────────►
                   ╲          28?              ╱
                    ╲──────────────────────╱
                               │ YES
                               ▼
                    ╱──────────────────────╲      NO
                   ╱    HAS ENGINE STARTED?   ╲──────────►
                    ╲──────────────────────╱
                               │ YES
                               ▼
        ┌──────────────────────────────────────────────┐
        │   DETECT ROTATIONAL SPEED AND TORQUE OF ENGINE │
        └──────────────────────────────────────────────┘
                               │
                               ▼
        ┌──────────────────────────────────────────────┐
        │            CALCULATE POWER FROM TORQUE          │
        └──────────────────────────────────────────────┘
                               │
                               ▼
        ┌──────────────────────────────────────────────┐
        │    INPUT ROTATIONAL SPEED AND POWER TO FIRST MAP 24 │
        └──────────────────────────────────────────────┘
                               │
                               ▼
        ┌──────────────────────────────────────────────┐
        │  DETERMINE OPENING/CLOSING TIMING FROM FIRST MAP 24 │
        └──────────────────────────────────────────────┘
                               │
                               ▼
        ┌──────────────────────────────────────────────┐
        │ INPUT DETERMINED OPENING/CLOSING TIMING TO SECOND MAP 25 │
        └──────────────────────────────────────────────┘
                               │
                               ▼
        ┌──────────────────────────────────────────────┐
        │  DETERMINE SECOND ELECTRIC SIGNAL FROM SECOND MAP 25 │
        └──────────────────────────────────────────────┘
                               │
                               ▼
        ┌──────────────────────────────────────────────┐
        │         INPUT DETERMINED SECOND ELECTRIC SIGNAL │
        │            TO ELECTROPNEUMATIC CONVERTER        │
        └──────────────────────────────────────────────┘
                               │
                               ▼
        ┌──────────────────────────────────────────────┐
        │ ELECTROPNEUMATIC CONVERTER 27 SUPPLIES PRESSURE ACCORDING │
        │   TO INPUT SECOND ELECTRIC SIGNAL TO ACTUATOR 28 │
        └──────────────────────────────────────────────┘
                               │
                               ▼
        ┌──────────────────────────────────────────────┐
        │        VARY PROTRUSION AMOUNT OF ACTUATOR 28   │
        │               AND ROTATE TAPPET SHAFT          │
        └──────────────────────────────────────────────┘
                               │
                               ▼
        ┌──────────────────────────────────────────────┐
        │   CHANGE OPENING/CLOSING TIMING OF INTAKE VALVE │
        └──────────────────────────────────────────────┘
                               │
                               ▼
                          ┌─────────┐
                          │ RETURN  │
                          └─────────┘
```

# FIG. 7

```
                    ┌──────────┐
                    │  START   │
                    └──────────┘
                         │
                         ▼
              ◇─────────────────────◇        NO
              ◇  HAS ENGINE STARTED? ◇ ──────────┐
              ◇─────────────────────◇            │
                         │ YES                    │
                         ▼                        │
    ┌──────────────────────────────────────────┐ │
    │ DETECT ROTATIONAL SPEED AND TORQUE OF ENGINE │ │
    └──────────────────────────────────────────┘ │
                         │                        │
                         ▼                        │
    ┌──────────────────────────────────────────┐ │
    │        CALCULATE POWER FROM TORQUE        │ │
    └──────────────────────────────────────────┘ │
                         │                        │
                         ▼                        │
    ┌──────────────────────────────────────────┐ │
    │  INPUT ROTATIONAL SPEED AND POWER TO FIRST MAP 24 │ │
    └──────────────────────────────────────────┘ │
                         │                        │
                         ▼                        │
    ┌──────────────────────────────────────────┐ │
    │ DETERMINE OPENING/CLOSING TIMING FROM FIRST MAP 24 │ │
    └──────────────────────────────────────────┘ │
                         │                        │
                         ▼                        │
    ┌──────────────────────────────────────────┐ │
    │ INPUT DETERMINED OPENING/CLOSING TIMING TO SECOND MAP 25 │ │
    └──────────────────────────────────────────┘ │
                         │                        │
                         ▼                        │
    ┌──────────────────────────────────────────┐ │
    │ DETERMINE SECOND ELECTRIC SIGNAL FROM SECOND MAP 25 │ │
    └──────────────────────────────────────────┘ │
                         │                        │
                         ▼                        │
    ┌──────────────────────────────────────────┐ │
    │ INPUT DETERMINED SECOND ELECTRIC SIGNAL TO SERVO MOTOR │ │
    └──────────────────────────────────────────┘ │
                         │                        │
                         ▼                        │
    ┌──────────────────────────────────────────┐ │
    │        SERVO MOTOR ROTATES TAPPET SHAFT    │ │
    │         ACCORDING TO INPUT SIGNAL          │ │
    └──────────────────────────────────────────┘ │
                         │                        │
                         ▼                        │
    ┌──────────────────────────────────────────┐ │
    │ CHANGE OPENING/CLOSING TIMING OF INTAKE VALVE │ │
    └──────────────────────────────────────────┘ │
                         │                        │
                         ▼                        │
                    ┌──────────┐                  │
                    │  RETURN  │                  │
                    └──────────┘                  │
```

# FIG. 8

RATED ROTATION
(RATED POWER)

ENGINE
ROTATIONAL
SPEED

IDLE ROTATION

—·—·— AIR TEMPERATURE 18°C
············· AIR TEMPERATURE 25°C
———————— AIR TEMPERATURE 36°C
—··—··— AIR TEMPERATURE 37°C

POWER-UP
STARTING

20          40

ELAPSED TIME (seconds)

# FIG. 9

EP 3 431 740 B1

# FIG. 10A

CONVENTIONAL 4-STROKE CYCLE

(Ps,Ts) (Ps,Ts) INTAKE VALVE CLOSED (Pc,Tc) (Pc,Tc) → (Pmax,Tmax) EXHAUST VALVE OPEN

COMPRESSION

EXPANSION (EXPANSION RATIO $\varepsilon$ e)

# FIG. 10B

4-STROKE MILLER CYCLE

(Ps*,Ts) INTAKE VALVE CLOSED COMPRESSION (Pc,Tc*) (Pc,Tc*) → (Pmax,T*max) EXHAUST VALVE OPEN

EXPANSION

EXPANSION (EXPANSION RATIO $\varepsilon$ e)

Ps*>Ps (SET IN SUPERCHARGER)
  (INTAKE TEMPERATURE Ts IS THE SAME)
Ts*<Ts
Tc*<Tc
T*max<Tmax(NOx REDUCTION)
  *MARK IS MILLER CYCLE

25

# FIG. 11A

# FIG. 11B

FIG. 12

FIG. 13A

FIG. 13B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4137704 B
- JP 2008202545 A
- JP 4367532 B
- WO 2015060117 A
- EP 2136054 A
- JP S6299606 A
- US 6230683 B1